# EUROPEAN PATENT SPECIFICATION

(11) **EP 2 109 277 B1**
(45) Date of publication and mention of the grant of the patent: **20.05.2015**
(21) Application number: 08837013.5
(22) Date of filing: 28.09.2008
(51) Int. Cl.: H04N 21/2343, H04N 21/2387, H04N 21/6377, H04N 21/658, H04L 29/06, H04N 21/6587

(54) **METHOD AND SYSTEM FOR MEDIA FLOW REAL TIME CONTROL**
VERFAHREN UND SYSTEM ZUR ECHTZEITKONTROLLE DES MEDIENFLUSSES
PROCÉDÉ ET SYSTÈME DE COMMANDE EN TEMPS RÉEL DE FLUX MULTIMÉDIA

(30) Priority: 30.09.2007 CN 200710151390
(43) Date of publication of application: 14.10.2009
(73) Proprietor: Huawei Technologies Co., Ltd., Longgang District Shenzhen, Guangdong 518129 (CN)
(72) Inventor: LIN, Yangbo, Guangdong 518129 (CN)
(74) Representative: Isarpatent
(86) International application number: PCT/CN2008/072589
(87) International publication number: WO 2009/046676

(56) References cited:
- WO-A1-2007/096001
- CN-A- 101 026 616
- CN-A- 101 026 617
- CN-A- 101 030 961
- US-A1- 2007 060 042
- NORTEL ET AL: "IMS-controlled: Replacing Section 6.3.7: Supplementary Services" 22 June 2005 (2005-06-22), 3GPP DRAFT; S2-051669 VCC 6_3_7 SUPPL SERVICES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050253143 [retrieved on 2005-06-22] * the whole document *

## Description

### Field of the Invention

The present invention relates to a network communication technology, and in particular, to a media stream real-time control method and system.

### Background of the Invention

An IP multimedia subsystem (IMS) is a subsystem proposed by the Third Generation Partnership Project to support IP multimedia services. The IMS can provide multiple media services, with the control function separated from the bearer capability, calls separated from sessions, applications separated from services, services separated from networks, and mobile network services converged with Internet services. According to the network evolution idea of separation between services and bearers, a function entity that provides media resource services based on the IMS network architecture, for example, a media resource server, may be divided into two key function components: media resource function controller (MRFC) and media resource function processor (MRFP). The MRFC, which is located at the service control layer, is responsible for media deployment and/or control. The MRFP, which is located at the bearer transport layer, is responsible for media processing and/or delivery.

In a real-time media service, for example, an IP television(IPTV) service, when a user wants to watch a program, the user needs to send a resource management request to the media resource server to process and transfer related media contents, such as creation, modification, deletion, and integration of media streams (including media codes, IP addresses and ports). In addition, the user may also need to exercise real-time interaction control over the media contents; for example, the user needs to control the play, stop, pause, resumption, fast forward, fast rewind, and recording of the media. In a current IMS-based network architecture, the MRFC can control the MRFP in managing the media resources, including creation, modification, deletion, integration, auditing and monitoring of media streams. However, the MRFC cannot control the MRFP in exercising interactive control over media resources, including play, stop, pause, resumption, fast forward, fast rewind, and recording of the media.

Thus, during the research of the present invention, the inventor finds at least the following problem in the existing technology: In the technical solution of the existing technology, the user cannot exercise real-time control over media resources in a network architecture where services are separated from bearers.

D1 (US 2007/060042 A1) discloses a system and a method for providing an interactive broadcast service, by which a communication service and an interactive broadcast service can be unitedly supported in an IMS.

D2 (NORTEL ET AL: "IMS-controlled: Replacing Section 6.3.7: Supplementary Services" 22 June 2005 (2005-06-22), 3GPP DRAFT) provides Supplementary Services impact of DTF.

### Summary of the Invention

The objective of embodiments of the present invention is to provide a media stream real-time control method and system, a media resource function controller (MRFC), and a media resource function processor (MRFP), so that real-time control may be exercised over media streams in a network architecture where services are separated from bearers.

The objective of the embodiments is achieved through the following technical solution:

A media stream real-time control method provided in an embodiment of the present invention includes:
receiving, by an MRFP, media stream real-time control information from a user equipment (UE);
parsing, by the MRFP, the received media stream real-time control information, and differentiating resource management related control information and/or interactive operation related control information;
exercising, by the MRFP, interactive operation control over media streams according to the obtained interactive operation related control information if obtaining interactive operation related control information through parsing; and
reporting, by the MRFP, the obtained resource management related control information to a media resource function controller, MRFC, if obtaining resource management related control information through parsing; and
exercising, by the MRFP, resource management control over media streams according to the received media resource control information that is converted from the resource management related control information from the MRFC.

An MRFP provided in an embodiment of the present invention includes:
a first receiving unit, adapted to receive media stream real-time control information from a UE;
a parsing unit, adapted to parse the media stream real-time control information received by the first receiving unit, differentiate resource management related control information and/or interactive operation related control information, send the interactive operation related control information to a processing unit, and send the resource management related control information to a first sending unit;
the processing unit, adapted to exercise real-time control over media streams according to the interactive operation related control information obtained by the parsing unit;
the first sending unit, adapted to report the resource management related control information obtained by the parsing unit to an MRFC; and
a second sending unit, adapted to report a result of the media stream real-time control that the processing unit performs on media streams according to the media stream real-time control information to the MRFC.

An MRFC provided in an embodiment of the present invention includes:
a receiving unit, adapted to receive all or part of media stream real-time control information from an MRFP;
a converting unit, adapted to convert all or part of the media stream real-time control information received by the receiving unit into media resource control information; and
a sending unit, adapted to send the media resource control information converted by the converting unit to the MRFP;
wherein the converting unit is specifically adapted to parse the received media stream real-time control information, including resource management related control information; and
convert the resource management related control information into media resource control information.

Through the media stream real-time control method and system, the media resource function controller (MRFC), and the media resource function processor (MRFP) provided in the embodiments of the present invention, the MRFP can exercise real-time control over media streams according to the media stream real-time control information sent from the UE. Thus, real-time control can be exercised over media streams in a network architecture where services are separated from bearers.

### Brief Description of the Drawings

FIG. 1 is a signaling flowchart of a media stream real-time control method according to a first embodiment of the present invention;
FIG. 2 is a signaling flowchart of a media stream real-time control method according to a second embodiment of the present invention;
FIG. 3 shows a structure of a media stream real-time control system according to an embodiment of the present invention;
FIG. 4 shows a structure of an MRFP according to an embodiment of the present invention;
FIG. 5 shows a structure of an MRFP according to another embodiment of the present invention;
FIG. 6 shows a structure of an MRFP according to another embodiment of the present invention; and
FIG. 7 shows a structure of an MRFP according to another embodiment of the present invention.

### Detailed Description of the Embodiments

The embodiments of the present invention provide a media stream real-time control method and system, a media resource function controller (MRFC) and a media resource function processor (MRFP). For better understanding of the technical solution of the present invention, the following describes the present invention in detail with reference to the accompanying drawings and exemplary embodiments.

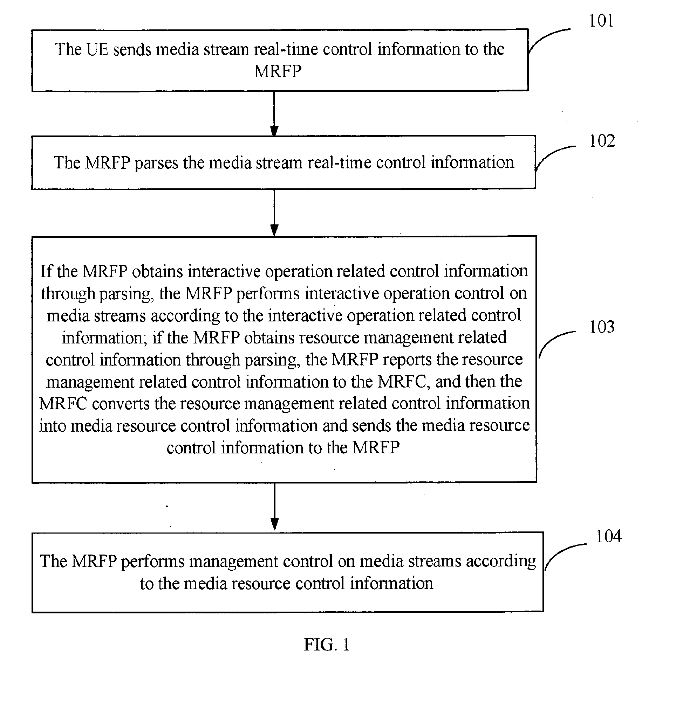

FIG. 1 is a signaling flowchart of a media stream real-time control method according to the first embodiment of the present invention.

As shown in the embodiment, a media real-time control channel is established between the UE and the MRFP, and a media resource control channel is established between the MRFC and the MRFP. The UE sends media stream real-time control information to the MRFP through the media real-time control channel. Then, the MRFP directly exercises interactive operation control over media streams according to interactive operation related control information in the media stream real-time control information; or the MRFP reports resource management related control information in the media stream real-time control information to the MRFC through the media resource control channel; the MRFC converts the resource management related control information into media resource control information, and sends the media resource control information to the MRFP through the media resource control channel; the MRFP exercises resource management control over media streams according to the media resource control information. The media resource control channel may use a request-response mechanism.

The media stream real-time control process includes the following steps:
Step 101: The UE sends media stream real-time control information to the MRFP through a media real-time control channel.

The media real-time control channel is established between the UE and the MRFP, and used for the UE to transmit the media stream real-time control information to the MRFC. The whole media real-time control channel may be located at the service control layer or bearer transport layer or at both the service control layer and the bearer transport layer. To transmit the media stream real-time control information, the media real-time control channel may use the Real-Time Streaming Protocol (RTSP), the Session Initiation Protocol (SIP) or the RTSP information encapsulated by the SIP.

The media stream real-time control information may include resource management related control information, such as creation, modification, deletion, integration, auditing and monitoring of media streams and any combination of parameters thereof, and interactive operation related control information, such as play, stop, pause, resumption, fast forward, fast rewind and recording of media streams and any combination of parameters thereof.

Step 102: The MRFP parses the received media stream real-time control information, and differentiates resource management related control information and/or interactive operation related control information.

Step 103: If the MRFP obtains interactive operation related control information by parsing the received media stream real-time control information, the MRFP performs interactive operation control on media streams according to the interactive operation related control information; if the MRFP obtains resource management related control information by parsing the received media stream real-time control information, the MRFP reports the resource management related control information to the MRFC through the media resource control channel, and then the MRFC converts the received resource management related control information into media resource control information and sends the media resource control information to the MRFP through the media resource control channel.

The media resource control channel is established between the MRFC and the MRFP to transmit the resource management related control information in the media stream real-time control information and the converted media resource control information, and may use the request-response mechanism. The media resource control channel uses a gateway control protocol, for example, the H.248.

Step 104: The MRFP exercises resource management control over media streams according to the received media resource control information.

In this embodiment, the media resource control channel between the MRFC and the MRFP may be used to transmit other media resource control information besides the resource management related control information in the media stream real-time control information and the converted media resource control information, such as creation, modification, deletion, integration, auditing, and monitoring of media streams related to IP voice services, which is the same as the existing technology and will not be further described.

In addition, an interactive operation control channel may also be established between the MRFC and the MRFP, through which the MRFP reports the resource management related information to the MRFC. The interactive operation control channel uses the RTSP or the RTSP information encapsulated by a gateway control protocol (for example, H.248). The MRFP reports the resource management related control information in the media stream real-time control information to the MRFC through the interactive operation control channel. Then, the MRFC converts the resource management related control information into media resource control information, and sends the media resource control information to the MRFP through the media resource control channel; the MRFP exercises resource management control over media streams according to the media resource control information.

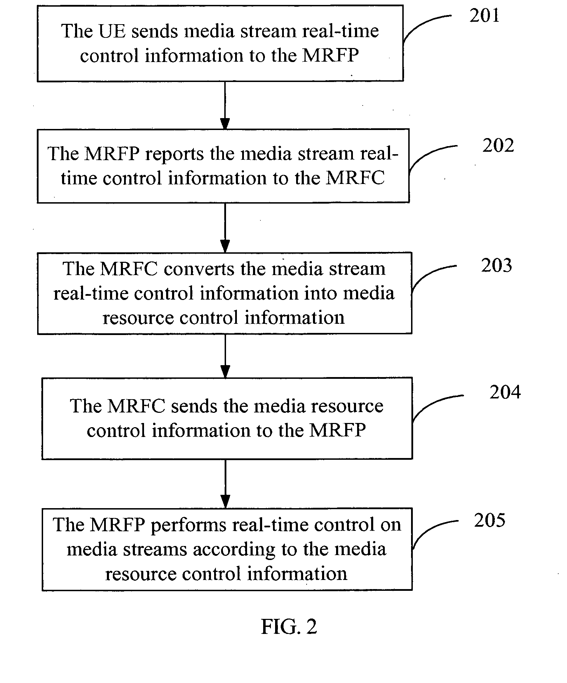

FIG. 2 is a flowchart of a media stream real-time control method according to the second embodiment of the present invention.

In this embodiment, a media real-time control channel is established between the UE and the MRFP, and a media resource control channel and an interactive operation control channel are established between the MRFC and the MRFP. The UE sends media stream real-time control information to the MRFP through the media real-time control channel; the MRFP reports the media stream real-time control information to the MRFC through the interactive operation control channel; the MRFC converts the media stream real-time control information into media resource control information, and sends the media resource control information to the MRFP through the media resource control channel.

The media resource real-time control process includes the following steps:
Step 201: The UE sends media stream real-time control information to the MRFP through a media real-time control channel.

The media real-time control channel is established between the UE and the MRFP, and is used by the UE for transmitting the media stream real-time control information to the MRFC. The whole media real-time control channel may be located at the service control layer or bearer transport layer or at both the service control layer and the bearer transport layer. To transmit media stream real-time control information, the media real-time control channel may use the RTSP, the SIP, or the RTSP information encapsulated by the SIP.

The media stream real-time control information may include resource management related control information, such as creation, modification, deletion, integration, auditing and monitoring of media streams and any combination of parameters thereof, and interactive operation related control information, such as play, stop, pause, resumption, fast forward, fast rewind and recording of media streams and any combination of parameters thereof.

Step 202: The MRFP reports the received media stream real-time control information to the MRFC through an interactive operation control channel.

The interactive operation control channel is established between the MRFC and the MRFP to report the media stream real-time control information sent by the MRFP to the MRFC, and may use the request-response mechanism. The interactive operation control channel uses RTSP or RTSP information encapsulated by the H.248.

Step 203: The MRFC converts the received media stream real-time control information into media resource control information.

The process of converting the received media stream real-time control information into media resource control information by the MRFC includes:
A. The MRFC parses the received media stream real-time control information, including resource management related control information and/or interactive operation related control information;
B. The MRFC converts the resource management related control information and/or interactive operation related control information into media resource control information.

Step 204: The MRFC sends the media resource control information to the MRFP through a media resource control channel.

The media resource control channel is established between the MRFC and the MRFP to transmit the media resource control information from the MRFC to the MRFP, and may use the request-response mechanism. To transmit the media resource control information, the media resource control channel may use a media gateway control protocol, for example, the H.248.

Step 205: The MRFP exercises real-time control over media streams according to the received media resource control information.

In this embodiment, the media resource control channel between the MRFC and the MRFP may be used to transmit other media resource control information besides the media resource control information that is converted from the media stream real-time control information, such as creation, modification, deletion, integration, auditing, and monitoring of media streams related to IP voice services, which is the same as the existing technology and will not be further described.

In this embodiment, the MRFP reports the media stream real-time control information to the MRFC through the interactive operation control channel. The MRFP may also report the media stream real-time control information to the MRFC through the media resource control channel.

In addition, the UE may also send media stream real-time control information to the MRFP through the media real-time control channel; the MRFP exercises real-time control over media streams according to the media stream real-time control information directly, and reports the resource management related result to the MRFC through the media resource control channel. To transmit the resource management related result generated from the media stream real-time control, the media resource control channel may use a media gateway control protocol, for example, the H.248. The media resource control channel may be used to transmit other media resource control information besides the resource management related result generated from the media stream real-time control, such as creation, modification, deletion, integration, auditing, and monitoring of media streams related to IP voice services, which is the same as the existing technology and will not be further described.

It is understandable to those skilled in the art that all or part of the steps in the preceding embodiments may be implemented by hardware instructed by a program. The program may be stored in a computer readable storage medium such as a read-only memory (ROM), a random access memory (RAM), a magnetic disk or a compact disk (CD).

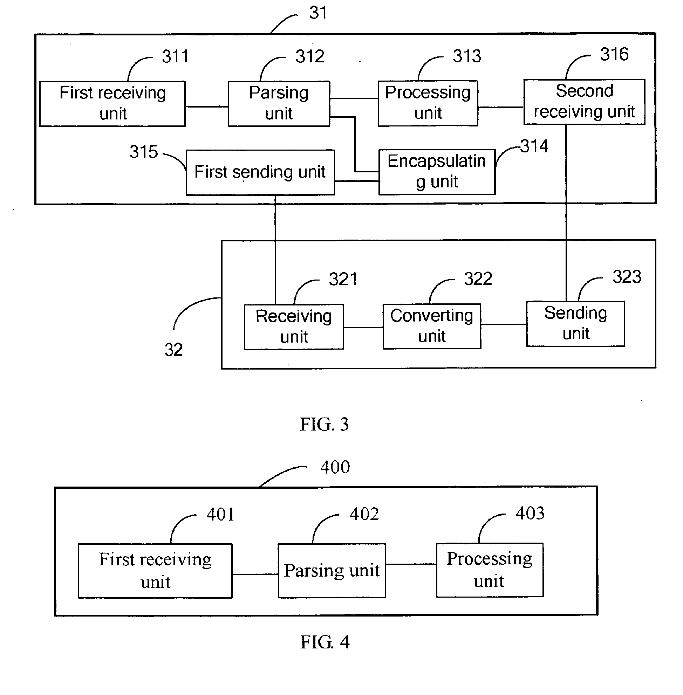

FIG. 3 shows a structure of a media stream real-time control system according to an embodiment of the present invention. The media stream real-time control system includes an MRFP 31 and an MRFC 32.

The MRFP 31 is adapted to: receive media stream real-time control information from a UE, and forward the resource management related control information in the media stream real-time control information to the MRFC 32; the MRFC 32 is adapted to: receive the resource management related control information from the MRFP 31, convert the resource management related control information into media resource control information, and send the media resource control information to the MRFP 31. The MRFP 31 exercises real-time control over media streams according to the interactive operation related control information and media resource control information in the media stream real-time control information.

The MRFP 31 includes a first receiving unit 311, a parsing unit 312, a processing unit 313, an encapsulating unit 314, a first sending unit 315, and a second receiving unit 316.

The first receiving unit 311 is adapted to receive media stream real-time control information from the UE; the parsing unit 312 is adapted to: parse the media stream real-time control information received by the first receiving unit 311, differentiate resource management related control information and/or interactive operation related control information, and send the interactive operation related control information to the processing unit 313; the first sending unit 315 is adapted to send the resource management related information obtained by the parsing unit 312 through parsing to the MRFC 32; the encapsulating unit 314 is adapted to encapsulate the media stream real-time control information before being sent by the sending unit 315 over a gateway control protocol or RTSP; the second receiving unit 316 is adapted to: receive media resource control information that is converted from the resource management related control information from the MRFC 32, and send the media resource control information to the processing unit 313; the processing unit 313 is adapted to exercise real-time control over media streams according to the interactive operation related control information obtained by the parsing unit 312 through parsing and the media resource control information received by the second receiving unit 316.

The MRFP 31 may send the resource management related control information to the MRFC 32 through a media resource control channel which uses a gateway control protocol, for example, the H.248.

The MRFP 31 may also send the resource management related control information to the MRFC 32 through an interactive operation control channel, which uses the RTSP or the RTSP information encapsulated by a gateway control protocol, for example, the H.248.

The MRFC 32 includes a receiving unit 321, a converting unit 322 and a sending unit 323.

The receiving unit 321 is adapted to receive part of media stream real-time control information (i.e. resource management related control information) from the MRFP 31; the converting unit 322 is adapted to convert the resource management related control information received by the receiving unit into media resource control information; and the sending unit 323 is adapted to send the media resource control information converted by the converting unit 322 to the MRFP 31.

In addition, the media stream real-time control system may include an MRFP and an MRFC. The MRFC has the same structure as that provided in the preceding embodiment. As shown in FIG. 4, the MRFP 400 includes:
a first receiving unit 401, adapted to receive media stream real-time control information from the UE;
a parsing unit 402, adapted to: parse the media stream real-time control information received by the first receiving unit 401, and differentiate resource management information and/or interactive operation related control information; and
a processing unit 403, adapted to exercise real-time control over media streams according to the resource management information and/or interactive operation related control information obtained by the parsing unit 402.

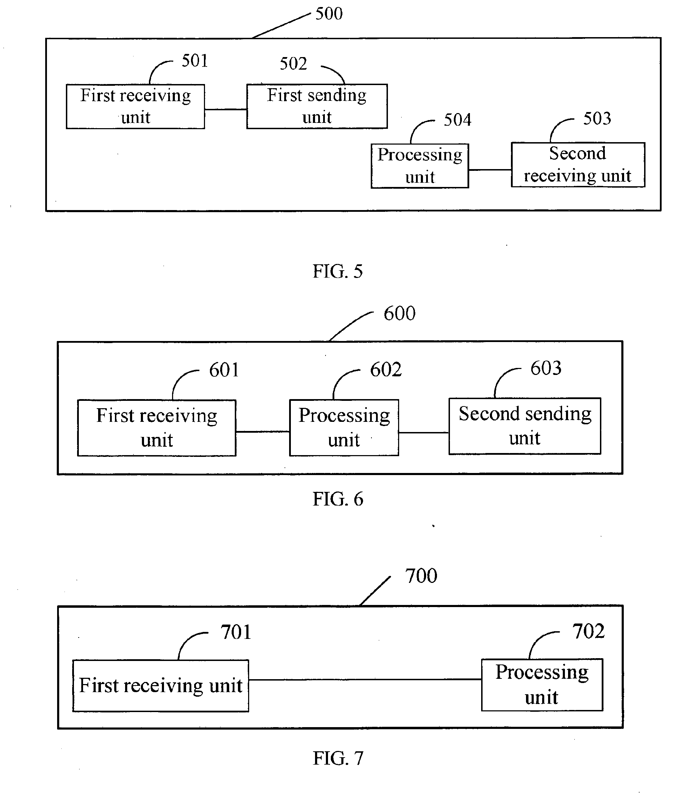

In addition, the media stream real-time control system may include an MRFP and an MRFC. The MRFC has the same structure as that provided in the preceding embodiment. As shown in FIG. 5, the MRFP 500 includes:
a first receiving unit 501, adapted to receive media stream real-time control information from the UE;
a first sending unit 502, adapted to send the media stream real-time control information received by the first receiving unit 501 to the MRFC;
a second receiving unit 503, adapted to receive media resource control information that is converted from the media stream real-time control information from the MRFC; and
a processing unit 504, adapted to exercise real-time control over media streams according to the media resource control information received by the second receiving unit 503.

In addition, the media stream real-time control system may include an MRFP and an MRFC. The MRFP exercises control (including resource management and interactive operation) over media streams independently after receiving the media stream real-time control information from the UE. Then, the MRFP reports the control results (for example, a resource management result) to the MRFC. As shown in FIG. 6, the MRFP 600 includes:
a first receiving unit 601, adapted to receive media stream real-time control information from the UE;
a processing unit 602, adapted to exercise real-time control over media streams according to the media stream real-time control information; and
a second sending unit 603, adapted to report the result of real-time control on media streams performed by the processing unit 602 according to the media stream real-time control information to the MRFC.

The media stream real-time control system may also include only an MRFP, adapted to: receive media stream real-time control information from the UE, and exercise real-time control over media streams according to the media stream real-time control information. As shown in FIG. 7, the MRFP 700 includes:
a first receiving unit 701, adapted to receive media stream real-time control information from the UE; and
a processing unit 702, adapted to exercise real-time control over media streams according to the media stream real-time control information received by the first receiving unit 701.

In the preceding embodiments of the present invention, the MRFP can exercise real-time control over media streams according to the media stream real-time control information sent from the UE. Thus, the real-time control may be exercised over media streams in a network architecture where services are separated from bearers.

Further, the MRFP receives media stream real-time control information from the UE directly, and the real-time control over media streams is also exercised by the MRFP, which improves the efficiency of the control interaction.

Detailed above are a media stream real-time control method and system, an MRFC and an MRFP provided by the present invention. The present invention is described through some exemplary embodiments, which are used for better understanding of the technical solution provided in the present invention. It is apparent that those skilled in the art can make various modifications and variations to the invention without departing from the scope of the invention. In conclusion, the contents of the specifications are not intended to limit the present invention.

## Claims

1. A media stream real-time control method, comprising:
receiving, by a media resource function processor, MRFP, media stream real-time control information from a user equipment, UE (101); **characterized by**
parsing, by the MRFP, the received media stream real-time control information (102), and differentiating resource management related control information and/or interactive operation related control information;
exercising, by the MRFP, interactive operation control over media streams according to the obtained interactive operation related control information if obtaining interactive operation related control information through parsing (103); and
reporting, by the MRFP, the obtained resource management related control information to a media resource function controller, MRFC, if obtaining resource management related control information through parsing (103); and
exercising, by the MRFP, resource management control over media streams according to the received media resource control information that is converted from the resource management related control information from the MRFC (104).

2. The method of claim 1, wherein the MRFP receives the media stream real-time control information from the UE through a media real-time control channel; and
the media real-time control channel uses the Real-Time Streaming Protocol, RTSP, the Session Initiation Protocol, SIP, or the RTSP information encapsulated by SIP.

3. The method of claim 1, wherein the MRFP reports the resource management related control information to the MRFC through a media resource control channel.

4. The method of claim 1, wherein the MRFP receives the media resource control information from the MRFC through a media resource control channel.

5. The method of claim 3 or 4, wherein the media resource control channel uses a media gateway control protocol.

6. A media resource function processor, MRFP (31), comprising:
a first receiving unit (311), adapted to receive media stream real-time control information from a user equipment, UE;
**characterized by**
a parsing unit (312), adapted to parse the media stream real-time control information received by the first receiving unit (311), differentiate resource management related control information and/or interactive operation related control information, send the interactive operation related control information to a processing unit (313), and send the resource management related control information to a first sending unit (315);
the processing unit (313), adapted to exercise real-time control over media streams according to the interactive operation related control information obtained by the parsing unit (312) and/or according to the received media resource control information from a second receiving unit (316);
the first sending unit (315), adapted to report the resource management related control information obtained by the parsing unit (312) to a media resource function controller, MRFC (32); and
the second receiving unit (316), adapted to receive the media resource control information that is converted from the resource management related control information from the MRFC, and send the media resource control information to the processing unit (313).

7. A media resource function controller, MRFC, **characterized by** comprising:
a receiving unit (321), adapted to receive all or part of media stream real-time control information from a media resource function processor, MRFP (31);
a converting unit (322), adapted to convert all or part of the media stream real-time control information received by the receiving unit into media resource control information; and
a sending unit (323), adapted to send the media resource control information converted by the converting unit to the MRFP,
wherein the converting unit (322) is adapted to parse the received media stream real-time control information, including resource management related control information; and
convert the resource management related control information into media resource control information.

## Patentansprüche

1. Medienstrom-Echtzeit-Steuerverfahren, das die folgenden Schritte aufweist:
Empfangen durch einen Medienressourcen-Funktionsprozessor, MRFP, von Medienstrom-Echtzeit-Steuerinformationen von einem Benutzergerät (user equipment, UE) (101); **gekennzeichnet durch**
Parsen **durch** den MRFP der empfangenen Medienstrom-Echtzeit-Steuerinformationen (102) und Differenzieren von die Ressourcenverwaltung betreffenden Steuerinformationen und/oder den interaktiven Betrieb betreffenden Steuerinformationen;
Ausüben **durch** den MRFP einer interaktiven Betriebssteuerung über Medienströme gemäß den erhaltenen, den interaktiven Betrieb betreffenden Steuerinformationen, wenn den interaktiven Betrieb betreffende Steuerinformationen **durch** das Parsen (103) erhalten werden; und
Mitteilen **durch** den MRFP der erhaltenen, die Ressourcenverwaltung betreffenden Steuerinformationen an einen Medienressourcen-Funktionscontroller, MRFC, wenn die Ressourcenverwaltung betreffende Steuerinformationen **durch** das Parsen (103) erhalten werden; und
Ausüben **durch** den MRFP einer Ressourcenverwaltungssteuerung über Medienströme gemäß den empfangenen Medienressourcen-Steuerinformationen, die aus den die Ressourcenverwaltung betreffenden Steuerinformationen vom MRFC umgesetzt werden (104).

2. Verfahren nach Anspruch 1, wobei der MRFP die Medienstrom-Echtzeit-Steuerinformationen vom UE durch einen Medien-Echtzeitsteuerkanal empfängt; und der Medien-Echtzeitsteuerkanal das "Real-Time Streaming Protocol", RTSP, das "Session Initiation Protocol", SIP, oder die durch SIP eingekapselten RTSP-Informationen verwendet.

3. Verfahren nach Anspruch 1, wobei der MRFP die die Ressourcenverwaltung betreffenden Steuerinformationen an den MRFC durch einen Medienressourcen-Steuerkanal mitteilt.

4. Verfahren nach Anspruch 1, wobei der MRFP die Medienressourcen-Steuerinformationen vom MRFC durch einen Medienressourcen-Steuerkanal empfängt.

5. Verfahren nach Anspruch 3 oder 4, wobei der Medienressourcen-Steuerkanal ein Media-Gateway-Control-Protokoll verwendet.

6. Medienressourcen-Funktionsprozessor, MRFP (31), der Folgendes aufweist:
eine erste Empfangseinheit (311), die eingerichtet ist, Medienstrom-Echtzeit-Steuerinformationen von einem Benutzergerät, UE, zu empfangen;
**gekennzeichnet durch**
eine Parsingeinheit (312), die eingerichtet ist, die **durch** die erste Empfangseinheit (311) empfangenen Medienstrom-Echtzeit-Steuerinformationen zu parsen, die Ressourcenverwaltung betreffende Steuerinformationen und/oder den interaktiven Betrieb betreffende Steuerinformationen zu differenzieren, die den interaktiven Betrieb betreffenden Steuerinformationen an eine Verarbeitungseinheit (313) zu senden,
und die die Ressourcenverwaltung betreffenden Steuerinformationen an eine erste Sendeeinheit (315) zu senden;
die Verarbeitungseinheit (313), die eingerichtet ist, eine Echtzeitsteuerung über Medienströme gemäß den den interaktiven Betrieb betreffenden Steuerinformationen, die **durch** die Parsingeinheit (312) erhalten werden, und/oder gemäß den empfangenen Medienressourcen-Steuerinformationen von einer zweiten Empfangseinheit (316) auszuüben;
die erste Sendeeinheit (315), die eingerichtet ist, die die Ressourcenverwaltung betreffenden Steuerinformationen, die **durch** die Parsingeinheit (312) erhalten werden, einem Medienressourcen-Funktionscontroller, MRFC, (32) mitzuteilen; und
die zweite Empfangseinheit (316), die eingerichtet ist, die Medienressourcen-Steuerinformationen, die aus den die Ressourcenverwaltung betreffenden Steuerinformationen umgesetzt werden, vom MRFC zu empfangen, und die Medienressourcen-Steuerinformationen an die Verarbeitungseinheit (313) zu senden.

7. Medienressourcen-Funktionscontroller, MRFC, der **dadurch gekennzeichnet ist, dass** er Folgendes aufweist:
eine Empfangseinheit (321), die eingerichtet ist, die gesamten oder einen Teil von Medienstrom-Echtzeit-Steuerinformationen von einem Medienressourcen-Funktionsprozessor, MRFP, (31) zu empfangen;
eine Umsetzungseinheit (322), die eingerichtet ist, die gesamten oder einen Teil der durch die Empfangseinheit empfangenen Medienstrom-Echtzeit-Steuerinformationen in Medienressourcen-Steuerinformationen umzusetzen; und
eine Sendeeinheit (323), die eingerichtet ist, die durch die Umsetzungseinheit umgesetzten Medienressourcen-Steuerinformationen an den MRFP zu senden,
wobei die Umsetzungseinheit (322) eingerichtet ist, die empfangenen Medienstrom-Echtzeit-Steuerinformationen zu parsen, die die Ressourcenverwaltung betreffende Steuerinformationen enthalten; und
die die Ressourcenverwaltung betreffenden Steuerinformationen in Medienressourcen-Steuerinformationen umzusetzen.

## Revendications

1. Procédé de commande en temps réel de flux multimédia, comprenant :
la réception, par un processeur de fonction de ressources multimédia, MRFP,
d'informations de commande en temps réel de flux multimédia en provenance d'un équipement d'utilisateur, UE (101) ; **caractérisé par**
le parsage, par le MRFP, des informations de commande en temps réel de flux multimédia reçues (102), et la différenciation d'informations de commande liées à la gestion des ressources et/ou d'informations de commande liées à des opérations interactives ;
l'exercice, par le MRFP, d'une commande d'opérations interactives sur les flux multimédia en fonction des informations de commande liées à des opérations interactives obtenues en cas d'obtention d'informations de commande liées à des opérations interactives par parsage (103) ; et
la communication, par le MRFP, des informations de commande liées à la gestion des ressources obtenues à un contrôleur de fonction de ressources multimédia, MRFC, en cas d'obtention d'informations de commande liées à la gestion des ressources par parsage (103) ; et
l'exercice, par le MRFP, d'une commande de gestion de ressources sur les flux multimédia en fonction des informations de commande de ressources multimédia reçues qui sont converties à partir des informations de commande liées à la gestion de ressources depuis le MRFC (104).

2. Procédé selon la revendication 1, dans lequel le MRFP reçoit les informations de commande en temps réel de flux multimédia en provenance de l'UE par un canal de commande en temps réel de multimédia ; et
le canal de commande en temps réel de multimédia utilise le protocole de diffusion en flux continu en temps réel, RTSP, le protocole d'ouverture de session, SIP, ou les informations RTSP encapsulées par un SIP.

3. Procédé selon la revendication 1, dans lequel le MRFP communique les informations de commande liées à la gestion des ressources au MRFC par un canal de commande de ressources multimédia.

4. Procédé selon la revendication 1, dans lequel le MRFP reçoit les informations de commande de ressources multimédia depuis le MRFC par un canal de commande de ressources multimédia.

5. Procédé selon la revendication 3 ou 4, dans lequel le canal de commande de ressources multimédia utilise un protocole de commande de passerelle multimédia.

6. Processeur de fonction de ressources multimédia, MRFP (31), comprenant :
une première unité de réception (311), adaptée pour recevoir des informations de commande en temps réel de flux multimédia en provenance d'un équipement d'utilisateur, UE ;
**caractérisé par**
une unité de parsage (312), conçue pour procéder au parsage des informations de commande en temps réel de flux multimédia reçues par la première unité de réception (311), différencier des informations de commande liées à la gestion des ressources et/ou des informations de commande liées à des opérations interactives,
envoyer les informations de commande liées à des opérations interactives à une unité de traitement (313), et envoyer les informations de commande liées à la gestion des ressources à une première unité d'envoi (315) ;
l'unité de traitement (313), adaptée pour exercer une commande en temps réel sur des flux multimédia selon les informations de commande liées aux opérations interactives obtenues par l'unité de parsage (312) et/ou selon les informations de commande de ressources multimédia reçues depuis une seconde unité de réception (316) ;
la première unité d'envoi (315), adaptée pour communiquer les informations de commande liées à la gestion de ressources obtenues par l'unité de parsage (312) à un contrôleur de fonction de ressources multimédia, MRFC (32) ; et
la seconde unité de réception (316), adaptée pour recevoir les informations de commande de ressources multimédia qui sont converties à partir des informations de commande liées à la gestion de ressources en provenance du MRFC, et envoyer les informations de commande de ressources multimédia à l'unité de traitement (313).

7. Contrôleur de fonction de ressources multimédia, MRFC, **caractérisé en ce qu'**il comprend :
une unité de réception (321), adaptée pour recevoir tout ou partie d'informations de commande en temps réel de flux multimédia depuis un processeur de fonction de ressources multimédia, MRFP (31) ;
une unité de conversion (322), adaptée pour convertir tout ou partie des informations de commande en temps réel de flux multimédia reçues par l'unité de réception en informations de commande de ressources multimédia ; et
une unité d'envoi (323), adaptée pour envoyer les informations de commande de ressources multimédia converties par l'unité de conversion au MRFP,
dans lequel l'unité de conversion (322) est adaptée pour procéder au parsage des informations de commande en temps réel de flux multimédia reçues, y compris des informations de commande liées à la gestion de ressources ; et
convertir les informations de commande liées à la gestion des ressources en informations de commande de ressources multimédia.
